# EUROPEAN PATENT SPECIFICATION

(11) **EP 2 022 342 B1**
(45) Date of publication and mention of the grant of the patent: **22.12.2010**
(21) Application number: 07425521.7
(22) Date of filing: 09.08.2007
(51) Int. Cl.: A23L 1/212, A23N 1/00

(54) **A process for extracting purees from food products and a plant for carrying out the process**
Verfahren zur Extraktion von Püree aus Nahrungsmitteln und Anlage zur Durchführung des Verfahrens
Procédé pour l'extraction de purées de produits alimentaires et installation pour la réalisation du procédé

(43) Date of publication of application: 11.02.2009
(73) Proprietor: CFT S.p.A., 43100 Parma (IT)
(72) Inventor: Catelli, Roberto, 43100 Parma (IT); Romei, Stefano, 43100 Parma (IT); Lazzari, Alessio, 46030 Viadana, Mantova (IT); Gozzi, Mario, 43100 Parma (IT)
(74) Representative: Gotra, Stefano

(56) References cited:
- WO-A-03/045169
- WO-A-2005/072538
- FR-A- 2 517 934
- GB-A- 1 339 939
- US-A- 4 273 792
- US-A- 5 007 334
- US-B1- 6 368 654

## Description

The invention relates to a process for extracting purees from food products, as well as a plant for carrying out the process.

In particular, the process of the present invention is especially suited to extraction of purée from fruit, purée being a product which is obtained by separating undesired waste such as seeds (or pits), peel and leaves from whole fruits by means of a sieve. Fruit purée is mainly used as a food base for obtaining other products such as fruit juices, nectars, compotes, jams and marmalades.

In the prior art, the extraction of fruit purées can be done by applying two different technologies, respectively known by the names of hot extraction and cold extraction, which exhibit different advantages which in some ways are complementary.

The hot extraction technology, traditionally the more used, includes a stage of cooking the triturated fruit before the stages of extracting and refining, which are the true stages of extraction of the purée. Cooking is typically done internally of a heater, insides which the product reaches temperatures of between 85°C and 95°C; the function of the cooking is mainly to deactivate the oxidising enzymes (phenolase, polyphenoloxydase) and the pectolytic enzymes present in the triturated fruit. The deactivation of the enzymes is necessary to prevent two undesired effects from occurring: one is the darkening of the fruit by oxidation, caused by the oxidising enzymes present in the fruit itself; and two is the demolition by the pectolytic enzymes of the fruit pectines, which give the desired viscosity to the finished product. To be effective, the deactivation must be performed immediately following the stage of product trituration, and thus before the mentioned stages of extracting and refining, as the enzymes already present in the fruit activate on contact with oxygen and thus at the moment of trituration. It is, however, only when passing through the extracting and refining group that the separation of the pulp and the juice from the seeds, peels and other undesired refuse is performed. By cooking the product upstream of this separation, this waste material is cooked together with the rest of the fruit, leading to a considerable worsening of the taste of the product obtained as well as an alteration of the colour of the product with respect to the natural colour of the pulp. Further, the anti-parasitics which might be present on the surface of the peel of various fruits are amalgamated with the extracted pulp, with obvious negative effects on the product quality obtained. Finally, the direct injection of steam into the heater dilutes the product, lowering its quality and increasing the production costs due to the re-evaporation required downstream of the heater.

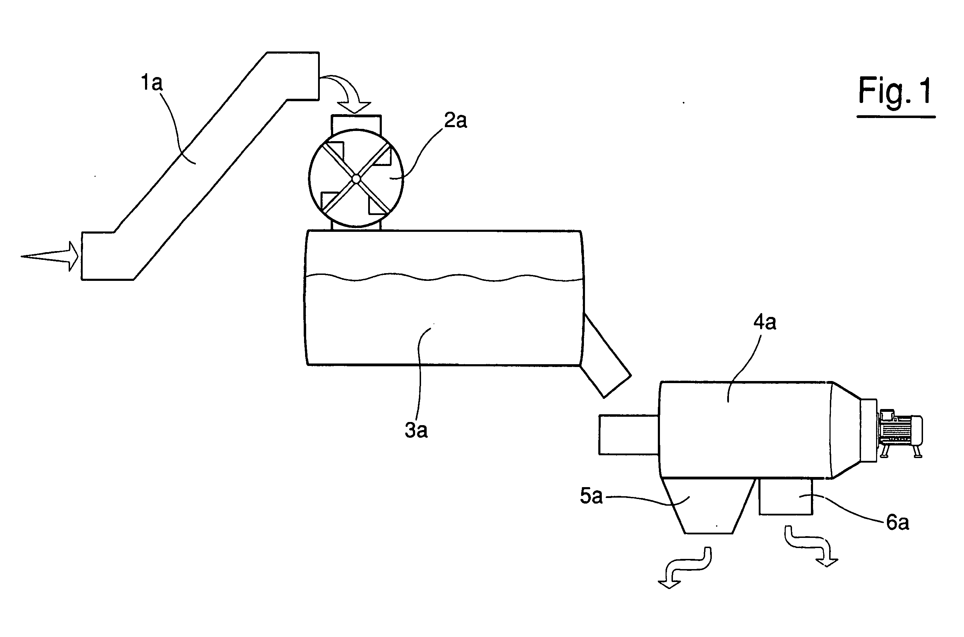

A hot-extraction process plant for fruit purée is schematically illustrated in figure 1, in which 1a denotes the elevator for the fruit produce to be processed, 2a the hammer triturator, 3 a the heater where the fruit is cooked by direct injection of steam, and 4a the extractor and refiner which extracts the purée (unloading hopper 5a) from the waste (outlet 6a).

In cold extraction the above-mentioned drawbacks are solved by delaying the cooking of the product, which is performed following the stages of extracting and refining. In this way, the waste products are immediately separated from the product, and the cooking is performed only on the product pulp. This leads to a general improvement in the aesthetic and flavour qualities of the purée obtained; in particular, the presence of peel and seeds does not alter the flavour and colour of the finished product. Cold extraction also exhibits some drawbacks, however, due to the late deactivation of the oxidising and pectolytic enzymes. To prevent the darkening of the product caused by the oxidising enzymes contained therein, a considerable quantity of ascorbic acid (around 400-800 ppm) have to be introduced into the process. Further, the pectolytic enzymes which are deactivated late on in the process cause the demolition of the majority of the pectin contained in the original processed fruit, with a negative effect on the viscosity of the obtained product.

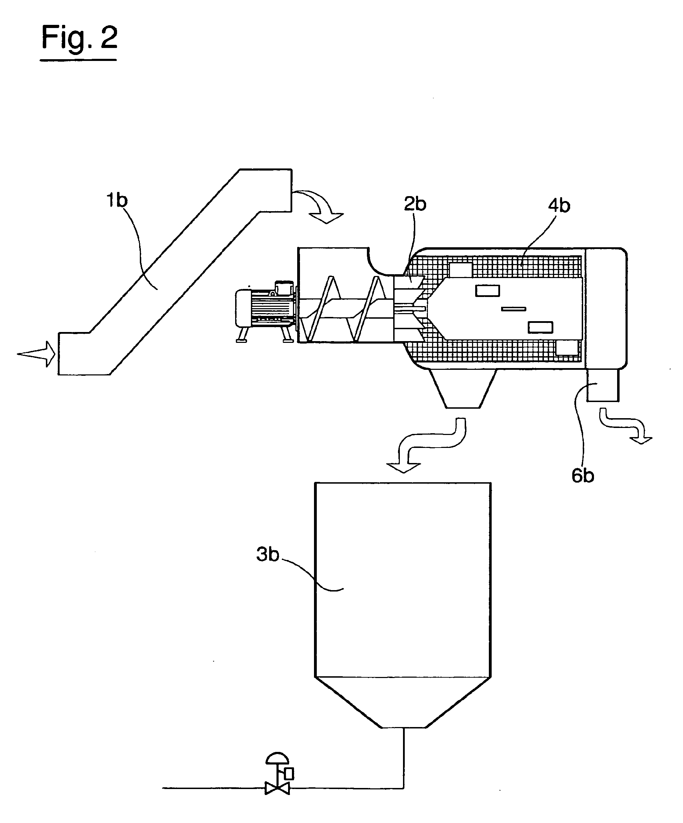

In figure 2 a cold extraction process of fruit purée is schematically illustrated, in which 1b denotes the elevator for the fruit to be processed, 2b the triturator group associated to the extracting and refining machine 4b, 3b the storage tank where the purée is deposited while waiting to be sent on to the heater, 6b the outlet for the waste.

Documents US5007334, FR2517934, WO 03/045169, EP 0850572 B1, disclose processes for extracting purée from food products of the same type of that according to the present invention.

The aim of the present invention is to provide a process for extracting purée from food products which exhibits neither the problems of hot extraction nor those of cold extraction.

An advantage of the process of the present invention is that the aesthetic and flavour qualities of the end product are not altered by cooking the waste together with the pulp and juice.

A further advantage of the process of the present invention is that it prevents the antiparasitics which may be present on the external surface of the product to be processed from getting dispersed in the end product.

A further advantage of the process described herein concerns the high viscosity of the purée which is obtained.

A further advantage of the process of the invention is that it requires no consumption of ascorbic acid.

A further advantage of the process relates to the recuperation of the aromatic vapours which evaporate during the stage of cooking the processed product.

A further advantage of the process relates to the minimising of the dilution of the purée due to the direct injection of the vapour, typical of hot processing systems.

Further characteristics and advantages of the process of the invention will better appear from the detailed description that follows with reference to the accompanying figures of the drawings, given by way of non-limiting illustration, in which:
figure 1 is a schematic representation of a process plant for hot extraction of fruit purées according to the prior art;
figure 2 is a schematic representation of a process plant for cold extraction of fruit purées according to the prior art;

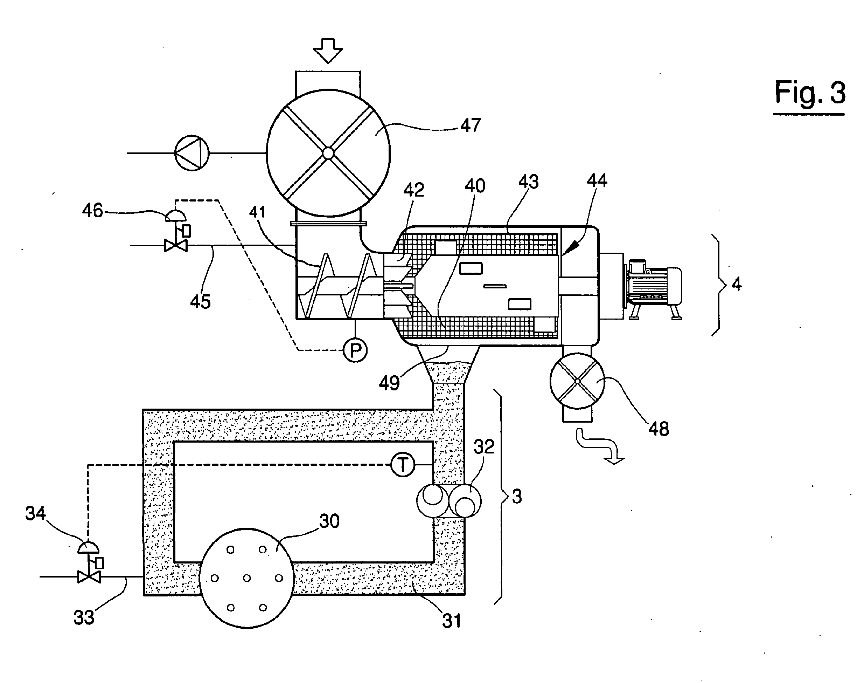

figure 3 is a schematic representation of a process plant for cold extraction of fruit purées according to the present invention.

The present invention relates to a process for extraction of purée from food products, and is especially suited to the extraction of purée from fruit. The process of the invention comprises the following stages: triturating a food produce; separating waste from the produce; refining, internally of a refining chamber 40, the triturated product until a purée is obtained; heating the purée to deactivate the enzymes contained therein and to prevent the deterioration thereof. These stages, as emerges from the preceding description of the prior art, are substantially comprised in known processes of cold extraction, in which the stage of heating, described as a cooking stage, is performed on the purée, i.e. on the product which is already refined and separated from the waste. In the process of the present invention, differently from the cold extraction process of the prior art, the stage of heating the purée is performed immediately after obtaining the purée by the stage of refining the triturated product and determines an immediate and considerable raising of the temperature of the purée itself. In this way, there is a considerable reduction in the time interval between the trituration of the fruit and the deactivation of the pectolytic and oxidising enzymes contained therein; during this time interval the enzymes, in contact with the oxygen, cause the product to deteriorate in known cold extraction processes.

During the stage of heating the purée a heat treatment is performed on the product obtained from the previously-described refining stage (and possibly a super-refining stage). During this heat treatment the product is rapidly brought to a temperature comprised between 60°C and 110°C (preferably a temperature of about 95°C). The stage of reheating the purée comprises the following sub-phases: introducing the purée in outlet from the refining chamber 40 directly into a recycling circuit 31; moving the purée through the recycling circuit 31; transmitting heat to the purée moving though the recycling circuit 31 by means of a heater 30 arranged along it; extracting the purée from the recycling circuit 31. During the stage of introducing the purée in outlet from the refining chamber 40 directly into a recycling circuit 31, the movement of the purée from the refining chamber 40 to the recycling circuit 31 is done by gravity. In substance, the purée is made to fall directly from a refiner 44, in which it is obtained, into an underlying recycling circuit. Here the newly-obtained purée is placed directly in contact with the already-heated purée internally of the circuit, and the above-described heating of the purée occurs. The immediate heating of the purée is facilitated by the high ratio between the flow of circulating purée and the flow entering. Advantageously the flow of purée moved across the recycling circuit 31 is at least five times the flow of purée entered into the circuit by the refining chamber 40. Preferably the purée flow moving through the recycling circuit 31 is comprised between 5 and 10 times the flow rate of purée introduced.

To enable control of the process temperatures during the stage of heating the purée, this stage comprises a sub-stage of acquiring the temperature value of the purée moved through the recycling circuit 31 and retroactively controlling the temperature by performing a sub-stage of extraction of the purée from the circuit.

A further particularity of the process of the present invention is that it comprises a stage of conveying the vapours generated during the stage of heating the purée to the refining chamber 40. This stage naturally derives from the previously-described arrangement of the refining chamber 40 above the recycling circuit 31 and in direct communication there-with; the steam vapours which are generated during the rapid heating of the purée introduced into the circuit naturally rise towards the overlying refining chamber 40.

The rising of the steam vapours internally of the refining chamber 40 has a double effect: firstly it creates an inert atmosphere internally of the chamber; secondly it enables the aromatic vapours generated during the cooking of the purée not to be lost, and to be recondensed by the cold product in the chamber.

The stage of refining the triturated product is thus carried out in an atmosphere comprising water vapour, an inert fluid in the gas phase. By fluid in the gas phase, reference is made herein either to a gas or a vapour. In the present document, inert fluids are considered to be gases or vapours which, being part of the atmosphere in which the products are processed, reduce the presence of oxygen, at least partially obstructing the action of the oxidising enzymes or the pectolytic enzymes contained therein, or both the categories of enzymes. In particular, the action of at least one of the categories of enzymes in an atmosphere comprising inert fluid will be less effective than the action of the same category of enzymes in a non-modified air atmosphere.

Advantageously the process further comprises a stage of introducing at least a supplementary inert fluid internally of the refining chamber 40, the pressure of the supplementary inert fluid mixture and the steam vapours generated during the stage of heating the purée internally of the refining chamber 40 being maintained at a higher level than the external atmospheric pressure. The supplementary inert fluid can be water vapour, or alternatively can be nitrogen, carbon dioxide or other gases and vapours not comprising free oxygen. The inert fluid can also be a gas mixture comprising more than one of the above-mentioned gases or vapours.

The elimination of atmospheric air from the process has the direct effect of blocking the enzymatic reactions involving oxygen (for example the oxidising reactions which cause the darkening of the product). According to the supplementary inert fluid used for actuating the process, other positive effects can be obtained on the finished product. For example, the carbon dioxide contributes to inhibiting hydrolysis of the pectine, which inhibiting is a risk due to the presence of the pectolytic enzymes internally of the processed fruit.

The stage of refining the triturated product is performed in the refining chamber 40 which is saturated by a mixture of inert fluids as described above. As already mentioned, in order for the chamber not to be contaminated by the external air, during the stage of introducing an inert fluid internally of the refining chamber 40 the pressure of the fluid mixture is maintained at a higher value than the atmospheric pressure outside the refining chamber 40 (in other words, the inert fluid atmosphere is maintained at a positive pressure).

In consideration of the fact that the oxidising enzymes in the processed fruit are brought into contact with the external atmosphere following the stage of trituration, in the described process the stage of triturating the food produce is also conveniently performed inside the refining chamber 40.

The trituration and refinement internally of a refining chamber 40 requires a stage of introducing the food product internally of the refining chamber 40; advantageously this stage is carried out by means of a first rotary sector valve 47. The use of the rotary sector valve 47 prevents introduction of external air during the course of the above-mentioned introduction stage. During this stage, the food produce (i.e. the fruit to be processed) is introduced into an sector which is open to the external environment, and then the valve is rotated such as to interrupt fluid communication of the loaded sector with the environment. In this position, a vacuum pump eliminates the residual air in the sector. Finally, the valve is further rotated such as to place the sector in communication with the inside of the refining chamber 40.

After the stage of introduction as described above, the process comprises a stage of moving the food product towards the triturating means, a stage which is advantageously carried out using a screw 41. Then the process includes the stage of trituration, followed by a stage of separating the waste from the product. This stage coincides with the extraction stage which consists in forcing part of the product through a sieve 43. During this operation, the pulp and juice of the fruit are separated from the waste (seeds, peel, any foreign bodies), which do not pass through the sieve 43. The next step is the refining stage and a possible super-refining stage (for the sake of convenience, from here onwards general reference will be made to the refining stage, bearing in mind that this also includes a super-refining stage), during which the product assumes the colloidal characteristic of purée. The stages of moving, trituration, extraction and refining differ from the equivalent stages of the processes in the prior art due to the fact that they are carried out in positive inert fluid pressure (steam or a mixture of steam with another fluid). The process must also comprise a stage of eliminating the process waste from the refining chamber 40; the waste can advantageously, though not necessarily, be eliminated using a second rotary sector valve 48. Alternative embodiments can include the use, instead of the second rotary valve 48, of a single-screw pump for food products or a simple outlet opening.

An extraction plant for purée from food products of the present invention comprises a refining station 4 and a cooking station 3 arranged downstream of the refining station 4 with respect to the flow of processed material; the refining station 4 comprises a refining chamber 40 and a refiner 44 arranged internally of the chamber; the refining chamber 40 comprises an exit for the purée in direct fluid communication with the cooking station 3. The cooking station 3 comprises a recycling circuit 31, a heater 30 arranged along the circuit 31 and means for moving a purée along the recycling circuit 31: the outlet for the purée 49 of the refining chamber 40 opens directly above the recycling circuit 31. Thanks to this, the processed material falls by force of gravity internally of the cooking station 3, while the vapours generated rise naturally towards the refining chamber 40. The outlet for the purée 49 is inferiorly afforded on a cylindrical-crown cylinder for containing the refined product coming from the refiner 44.

The refining chamber 40 is advantageously predisposed to contain internally thereof an inert fluid (as previously mentioned the steam vapour coming from the cooking station possible mixed with other gases or vapours) at a higher pressure than ambient pressure.

The plant can advantageously comprise means for introducing at least a supplementary inert fluid other than the vapours generated in the cooking station 3; the means for introducing comprising, in an embodiment, at least an inlet conduit 45 in communication with the inside of the refining chamber and a first flow valve 46 for the control of the fluid flow rate introduced through the conduit. As previously mentioned, various gases or vapours can be used as the inert fluid to be introduced internally of the chamber by means of the inlet conduit 45. The first flow valve 46 can conveniently be controlled retroactively using, as a control signal, a pressure sensor connected to the inside of the refining chamber 40.

To enable the refining chamber 40 to be maintained in inert positive gas or vapour pressure, the chamber is not in direct communication with the outside environment. The plant comprises a first rotary sector valve 47 for introducing the product into the chamber. The functioning of the valve, to which a vacuum pump is advantageously connected, has been fully described herein above.

The refining station 4 comprises a refiner 44 which in turn comprises a triturating group 42 arranged at the head thereof and at least a sieve 43. The refining station 4 preferably further comprises an advancing screw 41 for conveying the processed material towards the triturating group 42 located at the head of the refiner 44. The triturating group 42 comprises a series of rotary cutters rotating about a longitudinal axis, which triturate the product and project it against the cylindrical sieve 43. The process waste, the size of the various types of which does not enable them to pass through the sieve, are expelled from the refining chamber 40 at the outlet of the conduit defined by the cylindrical body of the sieve 43. A second rotary sector valve 48 advantageously enables the discharge of the waste externally of the refining chamber.

The cooking station 3 is, as mentioned herein above, in direct communication with an outlet mouth for the product from the refiner 44, and comprises the recycling circuit 31 and the heater 30 arranged along it. The heater 30 can be constituted by a tube-bundle heat exchanger, or alternatively by a direct steam-injection exchanger, or by exchangers of other types. Further, as previously described, the cooking station 3 comprises means for moving the purée along the recycling circuit 31. The means, in the preferred embodiment, are constituted by a positive displacement lobe pump 32. The cooking station 3 comprises an outlet conduit 33 for the processed product, in fluid communication with the recycling circuit 31. A second flow valve 34 is located along the outlet conduit 33, which is retroactively controlled by a thermostat predisposed to acquire the temperature of the product internally of the recycling circuit 31. As previously mentioned, the recycling circuit 31 is set in direct communication with the refiner 44 and below it. This enables a recuperation of the aromatic vapours which evaporated from the fruit purée during the cooking stage: these vapours rise towards the outlet of the refiner 44 and then condense internally thereof or penetrate towards the sieves of the machine in the refining chamber 40, contributing to a creation of a pressurised inert fluid in positive pressure internally thereof.

## Claims

1. A process for extracting purées from food products, comprising following stages: triturating a food product; separating waste from the food product; refining the triturated product internally ofa refining chamber (40) until a purée is obtained; heating the purée to an enzymes deactivating temperature in order to prevent deterioration of the purée said heating being performed in a cooking station (3) which is in direct communication with the refining chamber (40) the stage of heating the purée being performed immediately after obtaining the purée with the stage of refining the triturated product and causes an immediate and considerable increase in the temperature of the purée itself; **characterised in that** it comprises a stage of conveying the vapours generated during the heating stage to the refining chamber (40), by the natural rise of the vapour from the cooking station (3) to the refining chamber (40).

2. The process for extracting purée from food products of claim 1, **characterised in that** the stage of heating the purée comprises the following sub-stages: introducing the purée in outlet from the refining chamber (40) directly into a recycling circuit (31); moving the purée through the recycling circuit (31); transmitting heat to the purée moving through the recycling circuit (31) by means of a heater (30) arranged there-along; extracting the purée from the recycling circuit (31).

3. The process for extracting purée from food products of claim 2, **characterised in that** during the stage of introducing the purée in outlet from the refining chamber (40) directly into a recycling circuit (31), the moving of the purée from the refining chamber (40) to the recycling circuit (31) occurs by force of gravity.

4. The process for extracting purée from food products of claim 3, **characterised in that** the flow rate of the purée moving through the recycling circuit (31) is at least five times the flow rate of purée introduced into the circuit by the refining chamber (40).

5. The process for extracting purée from food products of claims from 2 to 4, **characterised in that** the stage of heating the purée also comprises a sub-stage of acquiring the temperature level of the purée moving through the recycling circuit (31) and retroactively controlling the temperature by carrying out the sub-stage of extracting the purée from the recycling circuit (31).

6. The process for extracting purée from food products of claims from 1 to 5, **characterised in that** the stage of triturating the food product is carried out internally of the refining chamber (40).

7. The process for extracting purée from food products of claims from 1 to 6, **characterised in that** it comprises a stage of introducing at least a supplementary inert fluid internally of the refining chamber (40), a pressure of the mixture of supplementary inert fluid mixture and vapours generated during the stage of heating the purée internally of the refining chamber (40) being maintained at a higher level than an external atmospheric pressure.

8. The process for extracting purée from food products of claim 7, **characterised in that** the supplementary inert fluid introduced is also water vapour.

9. The process for extracting purée from food products of claim 6 or 7, **characterised in that** it comprises a stage of introducing the food product internally of the refining chamber (40) by means of a first rotary sector valve (47).

10. A plant for extracting purée from food products, comprising a refining station (4) and a cooking station (3) arranged downstream with respect to the refining station (4), the refining station (4) comprising a refining chamber (40) and a refiner (44) arranged internally of the chamber, the refining chamber (40) comprising an outlet (49) for the purée which outlet is in direct communication with the cooking station (3);
**characterised in that** the cooking station (3) comprises a recycling circuit (31), a heater (30) arranged along the recycling circuit (31) and means for moving a purée along the recycling circuit (31), the outlet (49) for the purée opening directly above the recycling circuit (31).

11. The plant for extracting puree from food products of claim 10, **characterised in that** it comprises an outlet conduit (33) in fluid communication with the recycling circuit (31), a second flow valve (34) arranged along the outlet conduit (33) and a thermostat predisposed to acquire a temperature level of a purée present in the recycling circuit (31) and for retroactively controlling the second flow valve (34).

12. The plant for extracting purée from food products of claim 11, **characterised in that** the heater (30) is a tube-bundle heat exchanger.

13. The plant for extracting purée from food products of claim 11, **characterised in that** the heater (30) is a direct-injection steam exchanger.

14. The plant for extracting purée from food products of claim 12 or 13, **characterised in that** the means for moving a purée along the recycling circuit (31) comprises a positive displacement lobe pump.

15. The plant for extracting purée from food products of claims from 10 to 14, **characterised in that** the refmer (44) comprises a triturating group (42) and a sieve (43), the refining chamber (40) being predisposed to maintain internally thereof a higher pressure than an external atmospheric pressure.

16. The plant for extracting purée from food products of claim 15, **characterised in that** it comprises at least an inlet conduit (45) for introducing supplementary inert fluid in communication with the inside of the refining chamber (40) and a first flow valve (46) for controlling the flow rate of fluid introduced through the conduit.

17. The plant for extracting purée from food products of claim 16, **characterised in that** it comprises a pressure sensor connected to the inside of the refining chamber (40) for retroactively controlling the first flow valve (46).

18. The plant for extracting purée from food products of one of claims from 15 to 17, **characterised in that** it comprises a first rotary sector valve (47) for introducing a food product internally of the refining chamber (40).

## Patentansprüche

1. Verfahren zur Extraktion von Püree aus Nahrungsmitteln, enthaltend die folgenden Phasen: Zerkleinerung eines Nahrungsmittels; Trennen des Abfalls von dem Nahrungsmittel; Verfeinerung des zerkleinerten Produktes im Inneren einer Verfeinerungskammer (40) bis ein Püree erhalten ist; Erhitzen des Pürees bis auf eine Temperatur zur Entaktivierung der Enzyme, um das Verderben des Pürees zu verhindern, wobei das genannte Erhitzen in einer Kochstation (3) vorgenommen wird, welche sich in direkter Verbindung mit der Verfeinerungskammer (40) befindet, wobei die Phase des Erhitzens des Pürees unmittelbar nach dem Erhalten des Pürees durch die Phase der Verfeinerung des zerkleinerten Produktes ausgeführt wird und eine unmittelbare und beachtliche Erhöhung der Temperatur des Pürees selbst bewirkt; **dadurch gekennzeichnet, dass** es eine Phase des Leitens der während der Erhitzungsphase erzeugten Dämpfe in die Verfeinerungskammer (40) enthält, und zwar durch das natürliche Aufsteigen des Dampfes von der Kochstation (3) zu der Verfeinerungskammer (40).

2. Verfahren zur Extraktion von Püree aus Nahrungsmitteln nach Patentanspruch 1, **dadurch gekennzeichnet, dass** die Phase des Erhitzens des Pürees die folgenden Unterphasen enthält: Einführung des aus der Verfeinerungskammer (40) austretenden Pürees direkt in einen Umlaufkreis (31); Weiterführung des Pürees durch den Umlaufkreis (31); Übertragung von Hitze auf das sich durch den Umlaufkreis (31) bewegende Püree mit Hilfe einer entlang letzterem angeordneten Heizvorrichtung (30); Extraktion des Pürees aus dem Umlaufkreis (31).

3. Verfahren zur Extraktion von Püree aus Nahrungsmitteln nach Patentanspruch 2, **dadurch gekennzeichnet, dass** während der Phase des Einführens des aus der Verfeinerungskammer (40) austretenden Pürees direkt in einen Umlaufkreis (31) die Bewegung des Pürees aus der Verfeinerungskammer (40) in den Umlaufkreis (31) durch Schwerkraft erfolgt.

4. Verfahren zur Extraktion von Püree aus Nahrungsmitteln nach Patentanspruch 3, **dadurch gekennzeichnet, dass** der Durchfluss des sich durch den Umlaufkreis (31) bewegenden Pürees wenigstens fünf Mal den Durchfluss des Pürees beträgt, das durch die Verfeinerungskammer (40) in den Umlauf eingeführt wurde.

5. Verfahren zur Extraktion von Püree aus Nahrungsmitteln nach Patentanspruch von 2 bis 4, **dadurch gekennzeichnet, dass** die Phase des Erhitzens des Pürees ebenfalls eine Unterphase des Erreichens des Temperaturwertes des Pürees enthält, das sich durch den Umlaufkreis (31) bewegt, und des rückgekoppelten Steuerns der Temperatur durch das Ausführen der Unterphase der Extraktion des Pürees aus dem Umlaufkreis (31).

6. Verfahren zur Extraktion von Püree aus Nahrungsmitteln nach den Patentansprüchen von 1 bis 5, **dadurch gekennzeichnet, dass** die Phase des Zerkleinerns des Nahrungsmittelproduktes im Inneren der Verfeinerungskammer (40) ausgeführt wird.

7. Verfahren zur Extraktion von Püree aus Nahrungsmitteln nach den Patentansprüchen von 1 bis 6, **dadurch gekennzeichnet, dass** es eine Phase den Eingebens von wenigstens einem zusätzlichen trägen Fluid in die Verfeinerungskammer (40) enthält, wobei der Druck der Mischung aus zusätzlichem trägen Fluid und Dämpfen, die während der Erhitzungsphase des Pürees im Inneren der Verfeinerungskammer (40) erzeugt wurden, auf einem höheren Wert gehalten wird als der äussere atmosphärische Druck.

8. Verfahren zur Extraktion von Püree aus Nahrungsmitteln nach Patentanspruch 7, **dadurch gekennzeichnet, dass** das zusätzliche eingegebene träge Fluid aus Wasserdampf besteht.

9. Verfahren zur Extraktion von Püree aus Nahrungsmitteln nach Patentanspruch 6 oder 7, **dadurch gekennzeichnet, dass** es eine Phase des Einführens des Nahrungsmittelproduktes in das Innere der Verfeinerungskammer (40) mit Hilfe eines ersten Drehschiebers (47) mit Sektoren enthält.

10. Anlage zur Extraktion von Püree aus Nahrungsmitteln, enthaltend eine Verfeinerungsstation (4) und eine Kochstation (3), letztere angeordnet stromabwärts im Verhältnis zu der Verfeinerungsstation (4), wobei die Verfeinerungsstation (4) eine Verfeinerungskammer (40) und eine Verfeinerungsvorrichtung (44) enthält, angeordnet im Inneren der Kammer, wobei die Verfeinerungskammer (40) einen Auslass (49) für das Püree aufweist, welcher Auslass in direkter Verbindung mit der Kochstation (3) steht; **dadurch gekennzeichnet, dass** die Kochstation (3) einen Umlaufkreis (31) enthält, eine entlang dem Umlaufkreis (31) angeordnete Heizvorrichtung (30) und Mittel zum Bewegen eines Pürees entlang dem Umlaufkreis (31), wobei der Auslass (49) für das Püree direkt oberhalb des Umlaufkreises (31) mündet.

11. Anlage zur Extraktion von Püree aus Nahrungsmitteln nach Patentanspruch 10, **dadurch gekennzeichnet, dass** sie eine Auslassleitung (33) enthält, die in Strömungsverbindung mit dem Umlaufkreis (31) steht, wobei ein zweiter Drehschieber (34) entlang der Auslassleitung (33) angeordnet ist, sowie ein Thermostat, dazu vorgesehen, den Temperaturwert des Pürees aufzunehmen, das in dem Umlaufkreis (31) vorhanden ist, und um den zweiten Drehschieber (34) rückgekoppelt zu steuern.

12. Anlage zur Extraktion von Püree aus Nahrungsmitteln nach Patentanspruch 11, **dadurch gekennzeichnet, dass** die Heizvorrichtung (30) ein Wärmeaustauscher mit Rohrbündel ist.

13. Anlage zur Extraktion von Püree aus Nahrungsmitteln nach Patentanspruch 11, **dadurch gekennzeichnet, dass** die Heizvorrichtung (30) ein Dampfaustauscher mit Direkteinspritzung ist.

14. Anlage zur Extraktion von Püree aus Nahrungsmitteln nach Patentanspruch 12 oder 13, **dadurch gekennzeichnet, dass** die Mittel zum Bewegen des Pürees entlang dem Umlaufkreis (31) aus einer Verdrängerpumpe mit Nocken bestehen.

15. Anlage zur Extraktion von Püree aus Nahrungsmitteln nach den Patentansprüchen von 10 bis 14, **dadurch gekennzeichnet, dass** die Verfeinerungsvorrichtung (44) ein Zerkleinerungsaggregat (42) und ein Sieb (43) enthält, wobei die Verfeinerungskammer (40) dazu vorgesehen ist, in ihrem Inneren einen höheren Druck beizubehalten als der äussere atmosphärische Druck.

16. Anlage zur Extraktion von Püree aus Nahrungsmitteln nach Patentanspruch 15, **dadurch gekennzeichnet, dass** sie wenigstens eine Einlassleitung (45) zum Eingeben eines zusätzlichen trägen Fluids enthält, die mit dem Innenraum der Verfeinerungskammer (40) in Verbindung steht, und einen ersten Drehschieber (46) zum Steuern des Durchflusses des durch die Leitung eingegebenen Fluids.

17. Anlage zur Extraktion von Püree aus Nahrungsmitteln nach Patentanspruch 16, **dadurch gekennzeichnet, dass** sie einen Druckfühler enthält, angeschlossen an die Innenseite der Verfeinerungskammer (40), um den ersten Drehschieber (46) rückgekoppelt zu steuern.

18. Anlage zur Extraktion von Püree aus Nahrungsmitteln nach einem der Patentansprüche von 15 bis 17, **dadurch gekennzeichnet, dass** sie einen ersten Drehschieber (47) mit Sektoren zum Einführen eines Nahrungsmittels in das Innere einer Verfeinerungskammer (40) enthält.

## Revendications

1. Procédé pour l'extraction de purées de produits alimentaires, comprenant les phases suivantes: trituration un produit alimentaire; séparation du produit alimentaire les déchets; raffinage du produit alimentaire trituré à l'intérieur d'une chambre de raffinage (40) jusqu'à l'obtention d'une purée; chauffage de la purée à une température de désactivation des enzymes de manière à prévenir la détérioration de la purée, ledit chauffage étant réalisé dans une station de cuisson (3) qui est en communication directe avec la chambre de raffinage (40); la phase de chauffage de la purée étant réalisée immédiatement après l'obtention de la purée par la phase de raffinage du produit trituré, et causant une augmentation immédiate et considérable de la température de la purée elle-même; **caractérisé en ce qu'**il comprend une phase de convoyage des vapeurs générées pendant la phase de chauffage vers la chambre de raffinage (40), par la montée naturelle de la vapeur de la station de cuisson (3)à la chambre de raffinage (40).

2. Procédé pour l'extraction de purées de produits alimentaires selon la revendication 1, **caractérisé en ce que** la phase de chauffage de la purée comprend les sous-phases suivantes: introduction de la purée en sortie de la chambre de raffinage (40) directement dans un circuit de recirculation (31); déplacement de la purée au travers du circuit de recirculation (31); transmission de la chaleur à la purée se déplaçant au travers du circuit de recirculation (31) au moyen d'un réchauffeur (30) disposé le long de ce dernier; extraction de la purée du circuit de recirculation (31).

3. Procédé pour l'extraction de purées de produits alimentaires selon la revendication 2, **caractérisé en ce que**, pendant la phase d'introduction de la purée en sortie de la chambre de raffinage (40) directement dans le circuit de recirculation (31), le déplacement de la purée de la chambre de raffinage (40) au circuit de recirculation (31) se produit par force de gravité.

4. Procédé pour l'extraction de purées de produits alimentaires selon la revendication 3, **caractérisé en ce que** le débit de la purée se déplaçant au travers du circuit de recirculation (31) est au moins cinq fois supérieur au débit de la purée introduite dans le circuit depuis la chambre de raffinage (40).

5. Procédé pour l'extraction de purées de produits alimentaires selon les revendications 2 à 4, **caractérisé en ce que** les phases de chauffage de la purée comprennent également une sous-phase d'acquisition du niveau de température de la purée se déplaçant au travers du circuit de recirculation (31) et de contrôle rétroactif de la température en effectuant une sous-phase d'extraction de purée du circuit de recirculation (31).

6. Procédé pour l'extraction de purées de produits alimentaires selon les revendications 1 à 5, **caractérisé en ce que** la phase de trituration du produit alimentaire est réalisée à l'intérieur de la chambre de raffinage (40).

7. Procédé pour l'extraction de purées de produits alimentaires selon les revendications 1 à 6, **caractérisé en ce qu'**il comprend une phase d'introduction d'au moins un fluide inerte supplémentaire à l'intérieur de la chambre de raffinage (40), une pression de la mixture du fluide inerte supplémentaire et des vapeurs générées pendant la phase de chauffage de la purée à l'intérieur de la chambre de raffinage (40) étant maintenue à un niveau supérieur à la pression atmosphérique externe.

8. Procédé pour l'extraction de purées de produits alimentaires selon la revendication 7, **caractérisé en ce que** le fluide inerte supplémentaire introduit est également de la vapeur d'eau.

9. Procédé pour l'extraction de purées de produits alimentaires selon la revendication 6 ou 7, **caractérisé en ce qu'**il comprend une phase d'introduction du produit alimentaire à l'intérieur de la chambre de raffinage (40) au moyen d'une première vanne rotative à secteurs (47).

10. Installation pour l'extraction de purées de produits alimentaire, comprenant une station de raffinage (4) et une station de cuisson (3) disposée en aval de la station de raffinage (4), la station de raffinage (4) comprenant une chambre de raffinage (40) et un raffineur (44) disposé à l'intérieur de la chambre, la chambre de raffinage (40) comprenant une sortie (49) pour la purée, laquelle sortie est en communication directe avec la station de cuisson (3); **caractérisée en ce que** la station de cuisson (3) comprend un circuit de recirculation (31), un réchauffeur (30) disposé le long du circuit de recirculation (31) et des moyens de déplacement d'une purée le long du circuit de recirculation (31), la sortie (49) pour la purée s'ouvrant directement au-dessus du circuit de recirculation (31).

11. Installation pour l'extraction de purées de produits alimentaires selon la revendication 10, **caractérisée en ce qu'**elle comprend un conduit de sortie (33) en communication de fluide avec le circuit de recirculation (31), une seconde vanne de flux (34) disposée le long du conduit de sortie (33) et un thermostat prédisposé pour maintenir un niveau de température de la purée présente dans le circuit de recirculation (31) et rétroactivement contrôler la seconde vanne de flux (34).

12. Installation pour l'extraction de purées de produits alimentaires selon la revendication 11, **caractérisée en ce que** le réchauffeur (30) est un échangeur de chaleur à faisceau de tubes.

13. Installation pour l'extraction de purées de produits alimentaires selon la revendication 11, **caractérisée en ce que** le réchauffeur (30) est un échangeur à injection directe de vapeur.

14. Installation pour l'extraction de purées de produits alimentaires selon la revendication 12 ou 13, **caractérisée en ce que** les moyens de déplacement d'une purée le long du circuit de recirculation (31) comprennent une pompe à lobes à déplacement positif.

15. Installation pour l'extraction de purées de produits alimentaires selon les revendications 10 à 14, **caractérisée en ce que** le raffineur (44) comprend un groupe de trituration (42) et un tamis (43), la chambre de raffinage (40) étant prédisposée pour maintenir en son intérieur une pression supérieure à la pression atmosphérique externe.

16. Installation pour l'extraction de purées de produits alimentaires selon la revendication 15, **caractérisée en ce qu'**elle comprend au moins un conduit d'entrée (45) pour introduire un fluide inerte supplémentaire en communication avec l'intérieur de la chambre de raffinage (40) et une première vanne de flux (46) pour le contrôle du débit de fluide introduit au travers du conduit.

17. Installation pour l'extraction de purées de produits alimentaires selon la revendication 16, **caractérisée en ce qu'**elle comprend un capteur de pression connecté à l'intérieur de la chambre de raffinage (40) pour contrôler rétroactivement la première vanne de flux (46).

18. Installation pour l'extraction de purées de produits alimentaires selon l'une des revendications 15 à 17, **caractérisée en ce qu'**elle comprend une première vanne rotative à secteurs (47) pour l'introduction d'un produit alimentaire à l'intérieur de la chambre de raffinage (40).
